# EUROPÄISCHE PATENTSCHRIFT

(11) **EP 3 406 570 B1**
(45) Veröffentlichungstag und Bekanntmachung des Hinweises auf die Patenterteilung: **29.12.2021**
(21) Anmeldenummer: 18173497.1
(22) Anmeldetag: 22.05.2018
(51) Int. Cl.: C02F 1/42, E03B 7/07, F16K 47/00, F16K 11/07, C02F 1/00

(54) **WASSERARMATUR ZUM VERSCHNEIDEN VON BEHANDELTEM TRINKWASSER**
WATER FITTING FOR CUTTING OF TREATED DRINKING WATER
ROBINETTERIE À EAU DESTINÉE AU COUPAGE DE L'EAU POTABLE TRAITÉE

(30) Priorität: 26.05.2017 DE 202017103177 U; 22.09.2017 DE 102017122042
(43) Veröffentlichungstag der Anmeldung: 28.11.2018
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- DE-A1-102010 005 459
- DE-A1-102014 101 285
- DE-U1-202009 008 421
- Unknown: "SYR LEX Plus 10 Connect - eine Erfolgsgeschichte", , 14. März 2018 (2018-03-14), XP055515739, Internet Gefunden im Internet: URL:https://www.syr.de/de/News/333/SYR-LEX -Plus-10-Connect-eine-Erfolgsgeschichte [gefunden am 2018-10-16]
- SHKTV1KRS: "SYR: Wasserenthärtungsanlage LEX PLUS 10 Connect", Youtube, 24. Mai 2018 (2018-05-24), Seite 1, XP054978802, Gefunden im Internet: URL:https://www.youtube.com/watch?v=InpPFo zfdBA&t=1s [gefunden am 2018-10-19]

## Beschreibung

### Technisches Gebiet

Trinkwasser, welches von den Wasserwerken bereitgestellt wird, enthält neben anderen Ionen auch Kalziumionen, welche in den Rohleitungen, Armaturen und Haushaltsgeräten zu Verkalkung führen können. Der Kalziumgehalt wird als Wasserhärte angegeben. Eine hohe Wasserhärte ist daher unerwünscht.

Durch geeignete Wasserbehandlung, beispielsweise mittels Ionentauscher, können die Kalziumionen aus dem Trinkwasser entfernt werden. Das Wasser ist dann vollenthärtet. Kalzium ist jedoch in geringen Mengen gesundheitsfördernd. Eine vollständige Enthärtung ist daher gar nicht sinnvoll. Zudem hat der Ionentauscher eine begrenzte Kapazität. Nach einer gewissen Wassermenge, die von der Wasserhärte des Rohwassers abhängt, ist eine Regenerierung erforderlich.

Es gibt daher Anwendungen, bei denen das Rohwasser und das enthärtete Wasser gemischt (verschnitten) werden, so dass sich eine gewünschte Wasserhärte am Ausgang der Verschneideeinrichtung ergibt. Bekannte Anordnungen messen daher die Wasserhärte von Rohwasser, enthärtetem Wasser und gemischtem Wasser.

Neben der Wasserbehandlung muss das Wasser auch gefiltert werden. Dies ist u.a. in Deutschland gesetzlich vorgeschrieben. Außerdem ist es sinnvoll, einen Druckminderer vorzusehen, um einen kontrollierten Druck einzustellen.

### Stand der Technik

Unter der Bezeichnung "Drufi" werden von der Anmelderin seit vielen Jahren Druckminderer-Filter-Kombinationen vertrieben.

Aus der DE 102007059058 C5 und DE 10 2012 007 579 (Judo) ist jeweils ein Verfahren zum Betrieb einer Wasserenthärtungsanlage mit einer Ionentauschervorrichtung bekannt, die eine Verschneideeinrichtung aufweist. Das Rohwasser wird in Teilströme aufgeteilt. Ein Teilstrom wird enthärtet. Der andere Teilstrom wird dem enthärteten Wasser mit einstellbarem Verhältnis zugemischt. Bei der bekannten Anordnung wird die Leitfähigkeit des Rohwassers gemessen und die Gesamthärte über eine Kalibrierkennlinie bestimmt.

DE 10 2014 101 285 A1 beschreibt eine Anordnung zur Enthärtung von Trinkwasser mit einem Verschneideventil, die eine Steuerung aufweist, die über ein Netzwerk mit einem Server verbunden ist. Der Server ermittelt den Härtegrad des Wassers aus der geographischen Position der Anordnung.

DE 20 2009 008 421 U1 offenbart eine Adapterarmatur zum Anschließen einer Ionentauscheranordnung an eine Rohrleitung. Die Anordnung weist ein Verschneideventil zum Kontrollieren der Menge des durch die Bypassöffnung fließenden, nicht enthärteten Wassers auf, mit dem der Härtegrad einstellbar ist. Das Verschneideventil ermöglicht es, die gesamte Strömung vom Einlass zum Auslass zu leiten, wenn die Ionentauscheranordnung zum Warten oder Austauschen abgekoppelt ist.

DE 20 2014 106 162 U1 offenbart eine Verschneideeinrichtung für Wasserbehandlungsgeräte. Die Anordnung weist einen Strömungsmesser und einen Kugelhahn, sowie eine eigene Steuerungseinheit auf. Der Strömungsmesser dient zur Erfassung des Volumenstroms des Rohwassers. Aus dem Volumenstrom wird die eingestellte Wasserhärte ermittelt, ohne die Leitfähigkeit zu messen.

Nachteilig bei den bekannten Anordnungen ist es, dass die Rohrleitung für den Filter oder die Druckminderer-Filter-Kombination und die Wasserbehandlungseinrichtung jeweils eine eigene Anschlussarmatur benötigt. Die Rohrleitung muss zwei Mal aufgebrochen werden und benötigt eine große Baulänge.

DE 10 2013 102 460 A1 offenbart einen Heizungsvollautomaten mit einer Verschneideeinrichtung und einem Filter. Alle Funktionalitäten sind in einem Gehäuse integriert. Die Anordnung ist komplex und teuer.

DE 10 2010 005 459 A1 offenbart eine Absperrarmatur mit zwei parallelen Flanschverbindungen. Eine der Flanschverbindungen dient zum Anschließen der Absperrarmatur an eine Anschlussarmatur in der Rohrleitung. Die andere Flanschverbindung dient zum Anschließen einer Wasserbehandlungseinheit.

Die bekannten Geräte werden hintereinander in der Rohrleitung im Eingangsbereich einer Trinkwasserinstallation installiert. Alle bekannten Lösungen erfordern einen hohen Montageaufwand und eine Vielzahl von Dichtungen. Die Verwendung von mehreren Steuergeräten ist teuer und erfordert Know-How, Montageaufwand und ist störanfällig.

### Offenbarung der Erfindung

Es ist Aufgabe der Erfindung, die Baulänge und den Montageaufwand für Wasserarmaturen im Hauseingangsbereich zu reduzieren.

Erfindungsgemäß wird die Aufgabe mit einer Anordnung mit den Merkmalen des Anspruchs 1 gelöst.

Der Einlassanschluss und der Auslassanschluss sind zusätzlich zum Einlass und Auslass und zusätzlich zu den Anschlüssen für das Wasserbehandlungsgerät vorgesehen. Die Armatur hat also zusätzlich zum Einlass und Auslass insgesamt 4 Anschlüsse, nämlich zum Anschließen an eine Anschlussarmatur, zum Anschließen des Wasserbehandlungsgeräts und zum Anschließen eines Filters oder einer Druckminder-Filterkombination. Mit den Anschlüssen für den Filter oder die Druckminderer-Filterkombination kann sowohl das Wasserbehandlungsgerät als auch der Filter bzw. die Druckminderer-Filterkombination an der gleichen Stelle in der Rohrleitung installiert werden. Dadurch wird weniger Montageaufwand erforderlich und die Baulänge der Installation wird reduziert. Die Armatur erfordert keine eigene Steuerung und kann mit geringem Aufwand hergestellt, gelagert und installiert werden.

Vorzugsweise sind der Einlassanschluss und der Auslassanschluss zum Anschließen eines Filters oder einer Druckminderer-Filterkombination strömungsmäßig vor der Wasserbehandlungseinheit angeordnet. Dadurch wird die Wasserbehandlungseinheit vor Verschmutzung geschützt.

Bei einer besonders bevorzugten Ausgestaltung der Erfindung ist vorgesehen, dass der Einlass und der Auslass in einem Flansch zum Anschließen an eine Anschlussarmatur vorgesehen sind, wobei entweder der Einlass oder der Auslass in einem Zentralkanal und der jeweils andere in einem konzentrisch darum herum angeordneten Ringkanal vorgesehen ist.

Der Auslassanschluss und der Einlassanschluss zum Anschließen an einen Filter oder eine Druckminderer-Filterkombination ist von einem Flansch gebildet, bei dem einer der Anschlüsse von einem Zentralkanal und der jeweils andere der Anschlüsse von einem konzentrisch darum herum angeordneten Ringkanal gebildet ist, und der an einen korrespondierenden Flansch eines Filters oder einer Druckminderer-Filterkombination anflanschbar ist. Die Flanschverbindungen können insbesondere den üblicherweise verwendeten Flanschverbindungen entsprechen, so dass auch andere Geräte angeschlossen werden können. Bei Verwendung zweier gegenüberliegender Flansche können beispielsweise Ionentauscher oder andere Wasserbehandlungsgeräte vor bestehende Filteranordnungen mit Flanschverbindung installiert werden. Die Rohrleitung muss hierfür nicht erneut aufgebrochen werden.

Vorzugsweise ist ein Rückflussverhinderer im Einlass vor der Verschneideeinrichtung vorgesehen. Der Rückflussverhinderer öffnet in Richtung des Filters oder der Druckminderer-Filterkombination.

Die Verschneideeinrichtung umfasst erfindungsgemäß einen Gehäusestutzen an dem Gehäuse, in dem ein Verschneidekolben drehbeweglich gehalten ist, über welchen eine Bypassverbindung zwischen dem Einlass und dem Auslass unter Umgehung der Wasserbehandlungseinheit herstellbar ist.

Dabei ist vorgesehen, dass der Verschneidkolben zwei sich verjüngende Öffnungen umfasst, welche den Strömungsquerschnitt und damit den Volumenstrom des Rohwassers definieren, welches dem behandelten Wasser beigemischt wird.

Bei der Erfindung wird eine Sandwicharmatur geschaffen, die nicht nur zum Verschneiden von enthärtetem Wasser mit Rohwasser geeignet ist und an welche gleichzeitig ein Filter oder eine Druckminderer-Filterkombination anschließbar ist.

Ein Strömungsmesser in der Wasserbehandlungseinrichtung liefert Informationen über den Volumenstrom des Rohwassers, aus dem der Zeitpunkt ermittelt werden kann, wann ein Ionentauscher erschöpft ist und aus dem ermittelt werden kann, welche Einstellung die Verschneideeinrichtung erfordert.

Eine Steuer- und Auswerteeinheit ist in die Wasserbehandlungseinheit integriert.

Die Wasserbehandlungseinheit ist typischerweise voluminös und steht auf dem Boden. Sie wird durch die Steuer- und Auswerteeinheit nur wenig belastet. Dafür entfällt die Steuerung, die bei bekannten Geräten an der Verschneideeinrichtung vorgesehen ist. Die Armatur wird dadurch klein und leicht und kann gut montiert werden.

Die Verschneideeinrichtung kann von Hand eingestellt werden. Sie kann aber auch motorbetrieben sein, und die Steuer- und Auswerteeinheit kann Mittel zur Regelung der Härte am Auslass auf einen definierten Wert nach Maßgabe der Signale des Leitfähigkeitssensors aufweisen.

Die Erfindung sieht einen Leitfähigkeitssensor vor mit Mitteln zur Übertragung der vom Leitfähigkeitssensor erzeugten Signale an die Steuer- und Auswerteeinheit. Mit dem Leitfähigkeitssensor kann überprüft werden, ob sich die Wasserhärte des Rohwassers gegenüber einem ursprünglich gemessenen Härtegrad ändert. Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung einer Anordnung zum Aufbereiten von Trinkwasser mit Ionentauscher, Druckminderer-Filterkombination, Anschlussarmatur und Verschneideeinrichtung.
- Fig.2: ist eine Seitenansicht der Armatur aus Figur 1.
- Fig.3: ist eine Vorderansicht der Armatur aus Figur 1.
- Fig.4: ist eine Vorderansicht der Armatur aus Figur 1 ohne Druckminderer-Filteranordnung.
- Fig.5: ist eine Explosionsdarstellung der Verschneideeinrichtung aus der Anordnung aus Figur 1 im Detail.
- Fig.6: ist ein Horizontalschnitt der Wasserarmatur mit Verschneideeinrichtung zur Verwendung in einer in Figur 1 gezeigten Anordnung entlang der Schnittebene B-B.
- Fig.7: ist ein mittiger Vertikalschnitt durch die Anordnung aus Figur 6 in der Flanschebene.
- Fig.8: ist ein Horizontalschnitt der Armatur aus Figur 5 entlang einer Schnittebene G-G.
- Fig.9: ist ein Horizontalschnitt der Armatur aus Figur 5 entlang einer Schnittebene F-F.
- Fig.10.: ist ein Vertikalschnitt durch die Anordnung aus Figur 5 in der Ebene A-A, welche durch den Verschneidekolben geht.
- Fig.11: ist ein Vertikalschnitt durch die Anordnung aus Figur 5 entlang der Schnittebene E-E, welche gegenüber der Ebene A-A in Figur 10 um einen Winkel von 90° versetzt ist.

### Beschreibung des Ausführungsbeispiels

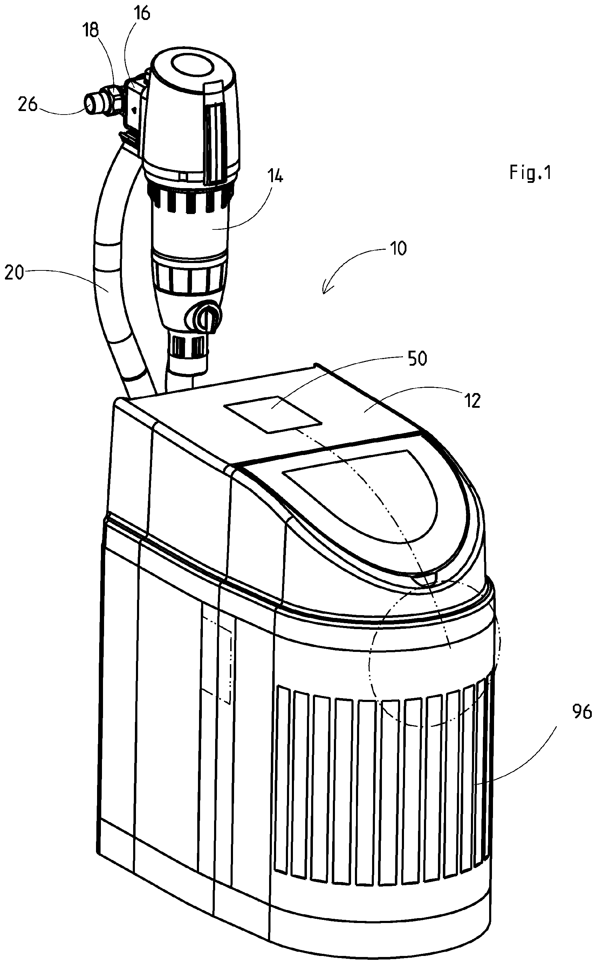

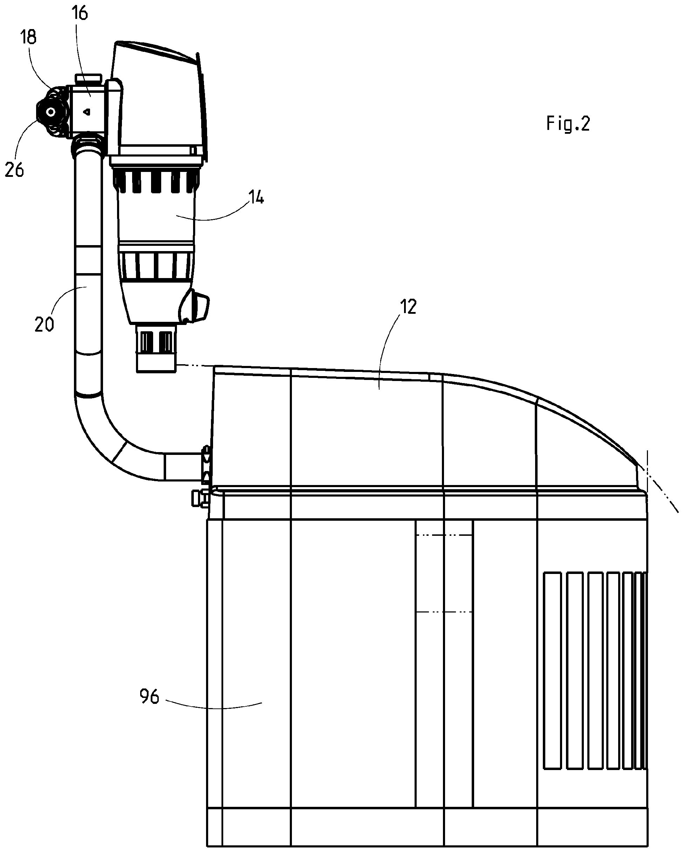

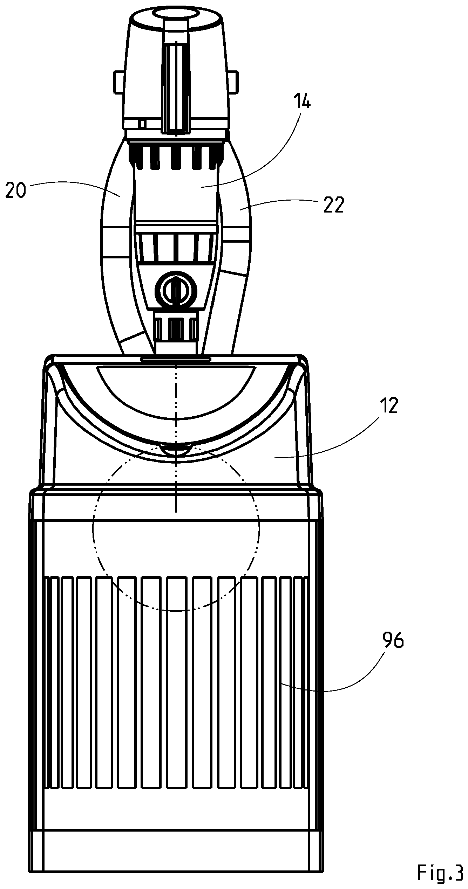

Figuren 1 bis 4 zeigen eine allgemein mit 10 bezeichnete Anordnung zur Wasserbehandlung. Die Anordnung zur Wasserbehandlung umfasst einen Ionentauscher 12, eine Druckminderer-Filteranordnung 14 und eine Sandwicharmatur mit einer Verschneidungseinrichtung 16. Die Anordnung 10 ist mit einem nachstehend näher beschriebenen Flansch an eine Anschlussarmatur 18 angeflanscht. Mit der Anschlussarmatur 18 kann die Anordnung in eine Rohrleitung (nicht dargestellt) beispielsweise im Eingangsbereich der Trinkwasserversorgung eines Gebäudes installiert werden. Der Ionentauscher 12 ist mit Schläuchen 20 und 22 an die Sandwicharmatur 16 angeschlossen.

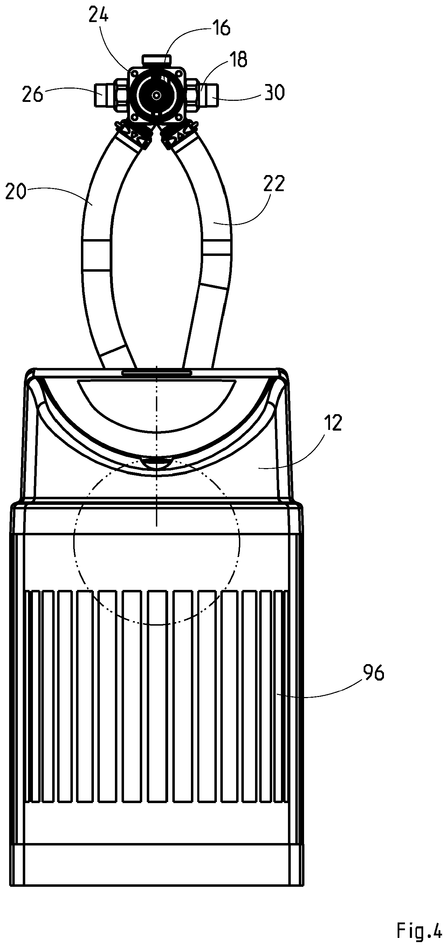

Figur 4 zeigt die Sandwicharmatur 16 mit offenem Flansch 24 zum Anflanschen der Druckminderer-Filteranordnung 14. Derartige Flansche sind aus dem Stand der Technik wohl bekannt. Das Wasser fließt in einem Zentralkanal durch die Verbindungsstelle in eine andere Armatur hinein und durch einen um den Zentralkanal herumlaufenden Ringkanal wieder heraus. Es gibt auch Flansche, bei denen das Wasser durch den Ringkanal hineinfließt und durch den Zentralkanal wieder heraus. Im vorliegenden Ausführungsbeispiel ist der Zentralkanal in der Sandwicharmatur 16 mit 40 bezeichnet. Der aus der Sandwicharmatur 16 herausführende Ringkanal ist mit 42 bezeichnet. Dieser Ringkanal 42 ist mit einem korrespondierenden Ringkanal in der Anschlussarmatur 18 verbunden.

Die Druckminderer-Filteranordnung 14 ist auf gleiche Weise mittels eines solchen Flansches 24 mit der Sandwicharmatur 16 verbunden. Die Sandwicharmatur 16 ist mittels eines solchen Flansches 28 mit der Anschlussarmatur 18 verbunden. Der Zentralkanal 40 mündet im korrespondierenden Zentralkanal in der Druckminderer-Filteranordnung 14. Der Ringkanal der Druckminderer-Filteranordnung 14 mündet in einem Ringkanal 44 in der Sandwicharmatur 16. Im vorliegenden Ausführungsbeispiel ist der Ringkanal 44 vom Ringkanal 42 durch eine Wandung 43 getrennt.

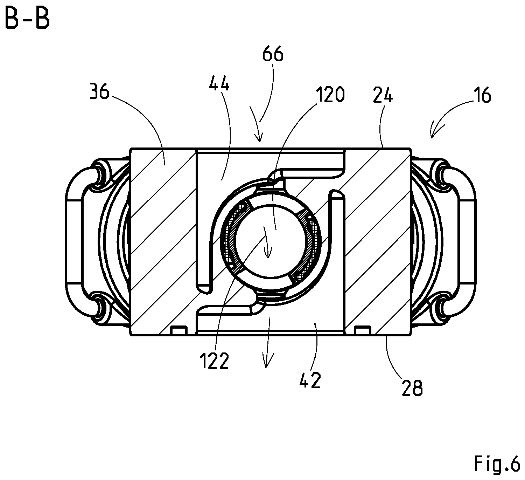

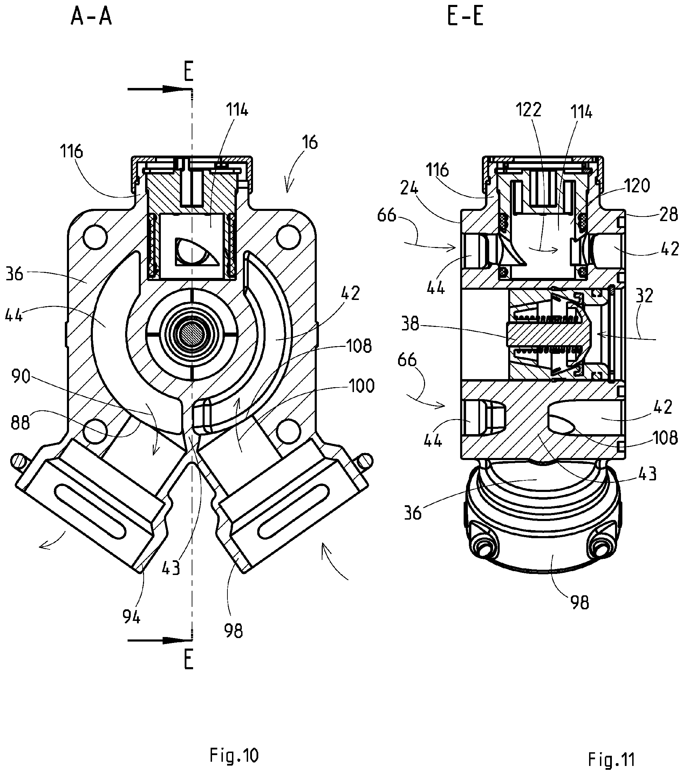

Der Zentralkanal 40 ist innerhalb der Anschlussarmatur 18 in bekannter Weise mit einem Einlass 26 an der Anschlussarmatur 18 verbunden. Der Ringkanal ist innerhalb der Anschlussarmatur 18 in bekannter Weise mit einem Auslass 30 der Anschlussarmatur 18 verbunden. Die Anschlussarmatur 18 wird in der Rohrleitung installiert. Rohwasser tritt am Einlass 26 ein und behandeltes, gefiltertes Wasser mit dem eingestellten Druck tritt am Auslass 30 (Fig.4) aus und steht in der Rohrleitung zur weiteren Verwendung zur Verfügung. Die beiden Flansche 24 und 28 an der Sandwicharmatur 16 sind in Figur 6 und 11 gut zu erkennen.

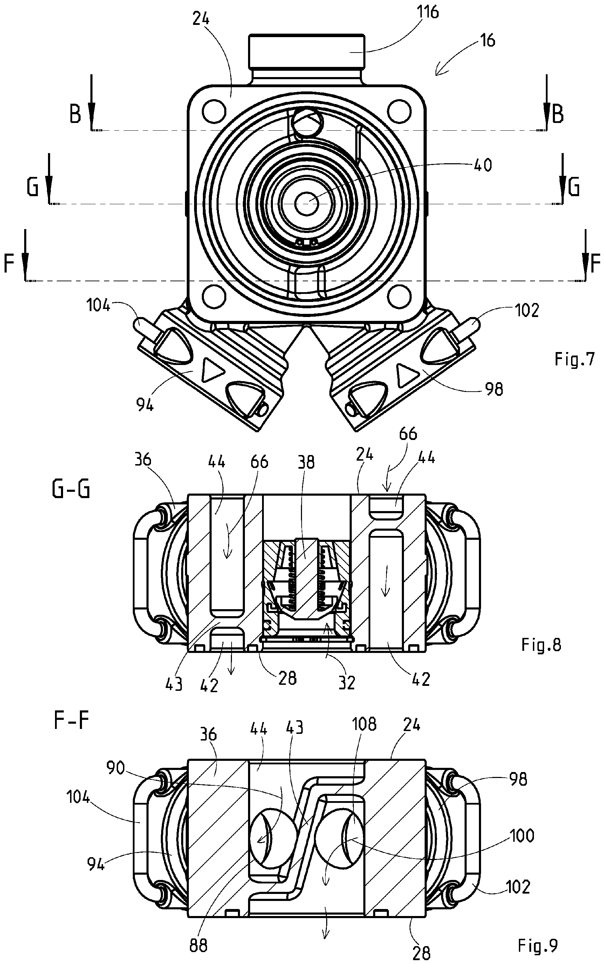

Figur 7 ist ein Vertikalschnitt durch die Sandwicharmatur 16. Figur 6, 8 und 9 sind Horizontalschnitte durch die Sandwicharmatur 16 in verschiedenen Schnittebenen B-B, G-G und F-F. Das Wasser tritt durch den Flansch 28 in Richtung des Pfeils 32 in den Zentralkanal 40 ein. Der Zentralkanal 40 ist in einem Armaturengehäuse 36 gebildet, an welches auch die Flansche 24 und 28 angeformt sind. Eingangsseitig ist hinter dem Flansch 28 ein Rückflussverhinderer 38 in den Zentralkanal 40 eingesetzt. Der Rückflussverhinderer 38 öffnet nach oben in Figur 8 bzw. nach links in Figur 11 in Richtung des Filters und verhindert, dass Wasser zurück in die Anschlussarmatur 18 gelangt. Der Rückflussverhinderer 38 ist als Patrone ausgebildet und kann leicht eingesetzt und ausgetauscht werden.

Wasser kann also vom Flansch 28 durch den Rückflussverhinderer 38 und den Zentralkanal 40 zum Zentralkanal des Flansches 24 fließen. Dort ist eine bekannte Druckminderer-Filteranordnung 14 angeflanscht. Derartige Druckminderer-Filteranordnungen 14 sind seit langem bekannt und brauchen daher hier nicht näher beschrieben werden. Ein Beispiel für eine solche Anordnung 14 wird unter dem Namen "Drufi-Plus" von der Anmelderin auf der Webseite www.syr.de vertrieben. Falls das Wasser nicht gefiltert werden muss und keine Druckregelung erforderlich ist - etwa weil weitere Geräte eingesetzt werden, die diese Funktionalität übernehmen, kann die Verbindung zum Ringkanal auch über einen einfachen Deckel hergestellt werden. Die Druckminderer-Filteranordnung 14 erfordert keine eigene Steuerung.

Wasser, das aus der Druckminderer-Filter-Anordnung zurückfließt, gelangt über den Flansch 24 in den Ringkanal 44. Dies ist durch einen Pfeil 66 illustriert. Der Ringkanal 44 ist mit einer nach sich nach oben erstreckenden Gehäusebohrung 120 verbunden. Vom Ringkanal fließt das Wasser in die Gehäusebohrung 120. Das ist durch einen Pfeil 122 illustriert.

Vom Ringkanal 44 aus gelangt das Wasser zu einer Öffnung 88. Die Öffnung 88 ist im Schnitt entlang der untersten Schnittebene F-F in Figur 9 und in Figur 10 zu erkennen. Die Fließrichtung des Wassers ist durch einen Pfeil 90 repräsentiert. Die Öffnung 88 liegt unterhalb des Zentralkanals 40 und mündet in einem Kanal im Gehäuse 36.

In Figur 10 ist eine vertikale Schnittebene E-E eingezeichnet. Die zugehörige Schnittzeichnung ist in Figur 11 dargestellt. Man erkennt in Figur 10, wie das Wasser durch den die Öffnung in Richtung eines Pfeils 90 zu einem Anschlussstutzen 94 fließt. An den Anschlussstutzen 94 wird der Schlauch 20 angeschlossen. Über den Schlauch 20 wird das unbehandelte Rohwasser der Enthärtungseinrichtung 12 zugeführt.

In der Enthärtungseinrichtung 12 ist ein Ionentauschergranulat vorgesehen. Wasser, das durch das Granulat geleitet wird, wird vollständig enthärtet. Dann hat das Wasser einen Härtegrad 0. Es sind keine Kalziumionen mehr im Wasser vorhanden. Je nach Granulat kann auch eine Entmineralisierung erfolgen. Das Ionentauschergranulat ist in einem Behälter 96 angeordnet. Das Wasser wird über den Schlauch 20 zum Behälter 96 geleitet. Dort wird es vollständig enthärtet und durch den Schlauch 22 zurück zur Sandwicharmatur 16 geleitet.

Die gemeinsame Steuerung 50 ist an der Enthärtungseinrichtung 12 vorgesehen. Dort laufen die Signal- und Steuerleitungen der Sensoren zusammen. Entsprechend braucht die Sandwicharmatur 16 keine eigene Steuer- und/oder Auswerteeinheit. Die Sandwicharmatur kann entsprechend mit geringeren Kosten gefertigt werden. Die Initialisierung und Einrichtung einer weiteren Steuereinheit entfällt.

Das in dem Ionentauscher vollständig enthärtete oder entmineralisierte Wasser fließt durch den Schlauch 22 und durch einen Gehäusestutzen 98 zurück in die Sandwicharmatur 16. Dies ist durch einen Pfeil 100 illustriert. Die Strömungsrichtung ist in Figur 9 und 10 gut zu erkennen. Die Schläuche 20 und 22 werden mit Klammern 102 und 104 axial fixiert.

Die Klammern 102 und 104 werden durch Öffnungen im Gehäusestutzen gesteckt und halten die Schläuche 20 und 22 in dem Stutzen, lassen aber eine Drehung zu.

Eine Verbindungsöffnung 108 verbindet das Innere des Gehäusestutzens 98 mit dem Ringkanal 42. Das Wasser fließt also weiter in den Ringkanal 42. Dies ist in Figur 9 und 10 durch den Pfeil 100 illustriert. Der Ringkanal 42 umgibt den Zentralkanal 40. Das enthärtete Wasser fließt durch den Ringkanal 42 zum Flansch 28 und kann von dort in die Anschlussarmatur 18 mit dem Auslass zur Rohrleitung fließen.

In der Regel ist es gar nicht erwünscht, dass das gesamte Trinkwasser vollständig enthärtet oder entmineralisiert wird. Die Kapazität des Ionentauschers ist bei Vollentsalzung schnell erschöpft. Außerdem ist ein gewisses Maß an Kalziumionen für den menschlichen Konsum gesund. In der Sandwicharmatur 16 ist daher eine Verschneidung (Mischung) von unbehandeltem Rohwasser mit vollenthärtetem oder vollentsalztem Wasser aus dem Ionentauscher 12 vorgesehen.

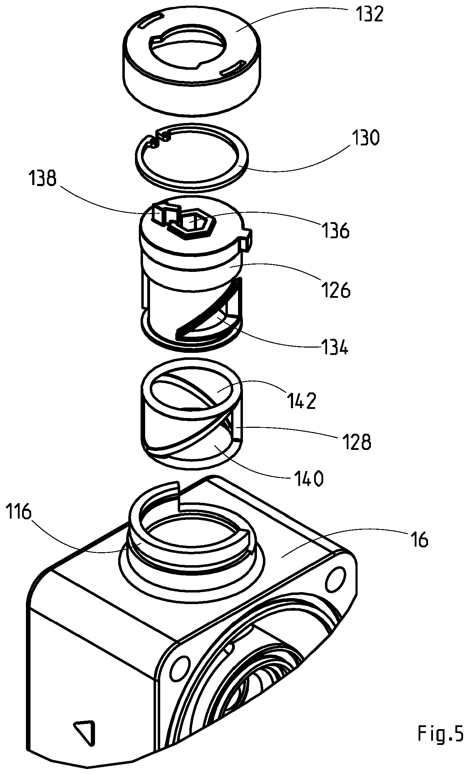

In Figur 5 und 10 ist eine Verschneideeinrichtung 114 zu erkennen, die an einem Stutzen 116 vorgesehen ist. Die Lage der Verschneideeinrichtung 114 ist in der Strömung vor dem Ionentauscher 12 vorgesehen. Die Verschneideeinrichtung sitzt in einem Gehäusestutzen 116. Der Gehäusestutzen 116 ist am Gehäuse 36 angeformt und erstreckt sich vertikal nach oben. Das Innere des Gehäusestutzens 116 ist einerseits mit dem Inneren des Ringkanals 44 verbunden. Andererseits ist das Innere des Gehäusestutzens 116 mit dem Ringkanal 42 verbunden, der zum Auslass führt. Dies ist in Figur 11 zu erkennen. Die Strömungsrichtung des Rohwassers zum Verschneiden des enthärteten Wassers ist durch Pfeile 66 und 122 in Figur 6 und Figur 11 illustriert.

Die Einstellung der Verschneideeinrichtung 114 bestimmt, wieviel Rohwasser unter Umgehung des Ionentauschers 12 das Innere 120 des Stutzens 116 zum Ringkanal 42 geleitet wird. Die Komponenten der Verschneideeinrichtung 114 sind in Figur 5 als Explosionsdarstellung im Detail dargestellt. Ein Verschneidekolben 126 wird mit einer Dichtung 128 und einem Sicherungsring 130 in den Gehäusestutzen 116 eingesetzt. Die Dichtung 128 dichtet sowohl in radialer, als auch in axialer Richtung. Zwei gegenüberliegende, dreieckige Öffnungen 140 und 142 lassen Wasser an definierter Stelle durch. Mit dem Sicherungsring 130 wird der Verschneidekolben 126 axial fixiert, bleibt aber drehbar. Ein Deckel 132 verschließt den Gehäusestutzen 116.

Der Verschneidekolben 126 ist im Wesentlichen zylindrisch und unten offen. Er hat ebenfalls eine dreieckige Öffnung 134 entlang des Mantels, die sich in Umfangsrichtung verjüngt. Wenn die dreieckige Öffnung 134 mit der Öffnung 140 in der Dichtung 128 vollständig überlappt, lässt die Verschneideeinrichtung eine maximale Menge an Rohwasser durch. Durch Drehung des Verschneidekolbens 126 verringert sich der Überlappungsgrad der Öffnungen. Dadurch verringert sich die durchgelassene Menge an Rohwasser. Dann wird weniger Rohwasser dem behandelten Wasser zugeführt. Entsprechend wird bei geringerem Überlappungsgrad ein geringerer Härtegrad eingestellt. Auf der Oberseite weist der Verschneidekolben 126 eine Sechskantöffnung 136 auf. In die Sechskantöffnung 136 kann ein Werkzeug eingesteckt werden, mit dem der Verschneidekolben 126 um eine vertikale Achse gedreht werden kann. Ein angeformter oder aufgedruckter Pfeil 138 ist ein Hinweis auf die Lage der Öffnung 134. Im vorliegenden Ausführungsbeispiel zeigt der Pfeil 138 gerade in der entgegengesetzten Richtung zur Öffnung 134.

Die Drehung kann mit einem Werkzeug von Hand oder über eine eingreifende Welle mittels eines Motors bewirkt werden. Dann erfolgt die Steuerung des Motors ebenfalls mit der gemeinsamen Steuerung 50.

Mit der sich verjüngenden Öffnung 134 wird der Strömungsquerschnitt und damit der Volumenstrom des dem enthärteten Wasser beigemischten Rohwassers definiert. In Figur 11 ist eine Bohrung zu erkennen, welche eine Verbindung zwischen dem Inneren des Stutzens 116 und dem Inneren des Verschneidekolbens 126 herstellt. Die Öffnung 134 im Verschneidekolben liegt auf der Höhe der Ringkanäle 42 und 44. Durch Drehen des Verschneidekolbens 126 wird der Öffnungsquerschnitt und folglich der Volumenstrom auf einen gewünschten Wert eingestellt. Der Einstellwinkel kann durch Kalibrierung ermittelt werden. Dann braucht der Nutzer nur den Pfeil 138 auf den angegebenen Wert auf einer Anzeige einstellen.

Ein Volumenstrommesser im Ionentauscher erfasst den Volumenstrom der durch den Ionentauscher 12 geleitet und enthärtet wird. Dieses Signal wird an die Steuerung 50 weitergeleitet. Die Steuerung 50 weist eine Auswerteeinheit zur Signalverarbeitung auf. Außerdem kann die Eingangshärte des Rohwassers eingegeben und gespeichert werden. Die Auswerteeinheit ermittelt mit einer geeigneten Kalibrierung beispielsweise aus einer mit einem Leitfähigkeitssensor ermittelten Leitfähigkeit die Wasserhärte. Die Wasserhärte kann auf einem Display angezeigt werden. Dann kann die Verschneideeinrichtung von Hand oder mit einer Motorsteuerung automatisch nachjustiert werden. Im letzteren Fall wird ein geeignetes Steuersignal erzeugt.

Zur Ermittlung des Erschöpfungsgrads wird zunächst die Verschneideeinrichtung vollständig geschlossen. Dann wird alles Wasser vollständig auf den Härtegrad 0 enthärtet. Durch geeignete Drehung des Verschneidekolbens kann das Gerät auf einen anderen Volumenstrom, beispielsweise 80% eingestellt werden. Dann werden 80% Rohwasser und 20% behandeltes Wasser gemischt und am Auslass bereitgestellt. Mit einem im Ionentauscher ohnehin vorhandenen Volumenstrommesser kann der durch den Ionentauscher fließende Volumenstrom ermittelt werden. Aus dem einmalig eingangs gemessenen Härtegrad des Rohwassers und dem Volumenstrom durch den Ionentauscher kann mittels einer Kennlinie der Erschöpfungsgrad des Ionentauschergranulats ermittelt werden. Wenn das Granulat erschöpft ist oder wenn die Erschöpfung innerhalb eines eingestellten Zeitraums zu erwarten ist, wird ein entsprechendes Signal für den Nutzer erzeugt.

Die Steuer- und Auswerteeinheit ist am Ionentauscher 12 vorgesehen. Der Ionentauscher nimmt ohnehin ein vergleichsweise großes Volumen ein und steht auf dem Boden. Die Geräte, die an der Wand im Bereich der Rohrleitung installiert werden, können ohne Steuer- und Auswerteeinheit besonders kompakt ausgestaltet sein. Außerdem wird nur eine Turbine für die Ermittlung der Wasserhärte und des Erschöpfungsgrad des Ionentauschergranulats benötigt. Die Sandwicharmatur ist daher nicht nur kostengünstiger, sondern auch klein und leicht, was die Lagerung, den Transport und die Montage erleichtert.

Wenn der Ionentauscher 12 erschöpft ist und das Wasser beim Durchströmen des Granulats nicht mehr vollständig enthärtet wird, muss dieser in üblicher Weise regeneriert werden. Dann kann die Verschneideeinrichtung auf den maximalen Durchlasswert eingestellt werden. Bei Verwendung eines Motors, kann dies beispielsweise nachts erfolgen, wenn in der Regel nur wenig Wasser verbraucht wird. Die Wasserversorgung erfolgt in diesem Zeitraum mit nicht-enthärtetem Rohwasser, ist aber nicht unterbrochen.

Die vorstehende Erfindung wurde hier anhand eines konkreten Ausführungsbeispiels beschrieben. Die Beschreibung dient jedoch nur zur Illustration der Erfindung. Der Umfang der Erfindung lässt eine Vielzahl von Variationen zu, die ausschließlich vom Schutzbereich der beigefügten Ansprüche bestimmt werden. So sind bestimmte Merkmale hinsichtlich Konstruktion, Material, Anordnung und Aufbau des Ausführungsbeispiels lediglich sinnvolle Ausgestaltungen. Rückflussverhinderer können an anderen Stellen eingesetzt werden. Messungen können an anderen Stellen erfolgen. Die

Anschlüsse können jede beliebige, dem Fachmann bekannte Ausgestaltung annehmen, solange diese unter den Schutzumfang der Ansprüche fällt.

## Patentansprüche

1. Wasserarmatur (16) zum Verschneiden von behandeltem Trinkwasser mit Rohwasser in Form von unbehandeltem Trinkwasser zur Bereitstellung von Trinkwasser mit definierter Härte enthaltend
(a) ein Gehäuse (36) mit einem an eine Trinkwasserversorgung anschließbaren Einlass und einem Auslass (42) zur Bereitstellung von Trinkwasser mit definierter Härte;
(b) eine an einem Auslassanschluss (94) und einem Einlassanschluss (98) angeschlossene Wasserbehandlungseinheit (12) mit Ionentauschergranulat;
(c) eine Verschneideeinrichtung (114) zum Verschneiden von behandeltem Trinkwasser mit unbehandeltem Rohwasser mit Stellmitteln (126, 134) zur Einstellung der Menge an Rohwasser, welche dem behandelten Trinkwasser beigemischt wird; wobei
(d) die Verschneideeinrichtung (114) einen Gehäusestutzen (116) an dem Gehäuse (36) umfasst, in dem ein Verschneidekolben (126) drehbeweglich gehalten ist, über welchen eine Bypassverbindung zwischen dem Einlass (42) und dem Auslass (44) unter Umgehung der Wasserbehandlungseinheit (12) herstellbar ist; wobei der Verschneidekolben zwei sich verjüngende Öffnungen umfasst, welche den Strömungsquerschnitt und damit den Volumenstrom des Rohwassers definieren, welches dem behandelten Wasser beigemischt wird;
(e) das Gehäuse (36) zusätzlich zum Einlass und dem Auslass (42) einen zusätzlichen Einlassanschluss (44) und einen zusätzlichen Auslassanschluss aufweist, an welchen ein Filter oder eine Druckminderer-Filterkombination (14) anschließbar ist, wobei
(f) der zusätzliche Auslassanschluss und der zusätzliche Einlassanschluss (44) zum Anschließen an einen Filter oder eine Druckminderer-Filterkombination (14) von einem Flansch (24) gebildet sind, bei dem einer der Anschlüsse von einem Zentralkanal (40) und der jeweils andere der Anschlüsse von einem konzentrisch darum herum angeordneten Ringkanal (44) gebildet ist, und der an einen korrespondierenden Flansch eines Filters oder einer Druckminderer-Filterkombination (14) lösbar anflanschbar ist, und
(g) der Auslassanschluss (94) und der Einlassanschluss (98) zum Anschließen der Wasserbehandlungseinheit (12) von Anschlussstutzen gebildet sind, deren Inneres direkt in einem Ringkanal (42, 44) münden;
**gekennzeichnet durch**
(h) einen Strömungsmesser in der Wasserbehandlungseinrichtung zum Liefern von Informationen über den Volumenstrom des Rohwassers,
(i) eine in die Wasserbehandlungseinheit integrierte Steuer- und Auswerteeinheit;
(j) einen Leitfähigkeitssensor mit Mitteln zur Übertragung der vom Leitfähigkeitssensor erzeugten Signale an die Steuer- und Auswerteeinheit, und
(k) eine in axialer und radialer Richtung abdichtende Dichtung am Verschneidekolben, mit welcher der Verschneidekolben in den Gehäusestutzen eingesetzt ist, so dass die Verschneideeinrichtung zur Ermittlung des Erschöpfungsgrads des Ionentauschergranulats vollständig verschließbar ist.

2. Wasserarmatur nach Anspruch 1, **dadurch gekennzeichnet, dass** der Einlassanschluss und der Auslassanschluss (24) zum Anschließen eines Filters oder einer Druckminderer-Filterkombination (14) strömungsmäßig vor der Wasserbehandlungseinheit (12) angeordnet ist.

3. Wasserarmatur nach einem der vorgehenden Ansprüche, **dadurch gekennzeichnet, dass** der Einlass und der Auslass (28) in einem Flansch (24) zum Anschließen an eine Anschlussarmatur (18) vorgesehen sind, wobei entweder der Einlass oder der Auslass in einem Zentralkanal (40) und der jeweils andere in einem konzentrisch darum herum angeordneten Ringkanal (42) vorgesehen ist.

4. Wasserarmatur nach einem der vorgehenden Ansprüche **gekennzeichnet durch** einen Rückflussverhinderer (38) im Einlass (16) vor der Verschneideeinrichtung (114).

## Claims

1. Water fitting (16) for mixing treated drinking water with raw water in the form of untreated drinking water for providing drinking water with a defined hardness, comprising
(a) a housing (36) with an inlet configured to be connected to a drinking water supply and an outlet (42) for providing drinking water with a defined hardness;
(b) a water treatment unit (12) with ion exchange granules connected to an outlet connection (94) and an inlet connection (98);
(c) a mixing device (114) for mixing treated drinking water with untreated raw water with adjustment means (126, 134) for adjusting the amount of treated drinking water which is added; wherein
(d) the mixing device (114) comprises a housing socket (116) at the housing (36) rotatingly accommodating a mixing piston (126) which is adapted to establish a bypass connection between the inlet (42) and the outlet (44) bypassing the water treatment unit (12); wherein the mixing piston comprises two conical openings which define the flow cross section and thereby the flow volume of the raw water which is added to the treated water;
(e) in addition to the inlet and the outlet (42) the housing (36) is provided with an additional inlet connection (44) and an additional outlet connection adapted to have a filter or a pressure reducer filter combination (14) connected thereto; wherein
(f) the additional outlet connection and the additional inlet connection (44) for connecting to a filter or a pressure reducer filter combination (14) is formed by a flange (24) where one of the connections is formed by a central channel (40) and the respective other one of the connections is an annular channel (44) concentrically arranged around it, and which is configured to be releasably connected to a corresponding flange of a filter or a pressure reducer filter combination (14), and
(g) the outlet connection (94) and the inlet connection (98) for connecting the water treatment unit (12) are formed by a connection socket having an inside which directly ends in an annular channel (42, 44);
**characterized by**
(h) a flow meter in the water treatment device for providing information about the flow volume of the raw water,
(i) a control- and processor unit integrated into the water treatment unit;
(j) a conductivity sensor with means for transmitting the signals generated by the conductivity sensor to the control- and processor unit, and
(k) a sealing sealing in an axial and in a radial direction of the mixing piston, which is inserted into the housing socket with the mixing piston, whereby the mixing device can be fully closed for determining the degree of exhaustion of the ion exchanger granules.

2. Water fitting according to claim 1, **characterized in that** the inlet connection and the outlet connection (24) for connecting a filter or a pressure reducer filter combination is arranged in the flow upstream of the water treatment unit (12).

3. Water fitting according to any of the preceding claims, **characterized in that** the inlet and the outlet (28) are provided in a flange (24) for connecting to a connection fitting (18), wherein either the inlet or the outlet is formed by a central channel (40) and the respective other one is provided in an annular channel concentrically extending around it.

4. Water fitting according to any of the preceding claims, **characterized by** a backflow preventer (38) in the inlet (16) upstream of the mixing device (114).

## Revendications

1. Pièce de robinetterie pour l'eau (16) destinée à couper de l'eau potable traitée avec de l'eau brute se présentant sous forme d'eau potable non traitée en vue de fournir de l'eau potable présentant une dureté définie, comprenant
(a) un boîtier (36) muni d'une entrée pouvant être raccordée à un dispositif d'alimentation en eau potable et d'une sortie (42) en vue de fournir de l'eau potable présentant une dureté définie ;
(b) une unité de traitement de l'eau (12) raccordée à un raccord de sortie (94) et un raccord d'entrée (98) et contenant des granulés échangeurs d'ions ;
(c) une installation de coupage (114) destinée à couper de l'eau potable traitée avec de l'eau brute non traitée à l'aide de moyens de réglage (126, 134) destinés à régler la quantité d'eau brute qui sera mélangée à l'eau potable traitée ;
(d) l'installation de coupage (114) comprenant sur le boîtier (36) un raccord de boîtier (116) dans lequel est fixé un piston de coupage (126) de sorte à pouvoir se déplacer par rotation et permettant d'établir une connexion de dérivation entre l'entrée (42) et la sortie (44) en contournant l'unité de traitement de l'eau (12) ; le piston de coupage comprenant deux orifices se rétrécissant définissant la section d'écoulement du courant et ainsi le débit d'eau brute qui sera mélangée à l'eau traitée ;
(e) le boîtier (36) comprend en plus de l'entrée et de la sortie (42) un raccord d'entrée (44) supplémentaire et un raccord de sortie supplémentaire auquel peut être raccordé un filtre ou une combinaison de filtre et de réducteur de pression (14), pièce de robinetterie pour laquelle
(f) afin d'être raccordés à un filtre ou une combinaison de filtre et de réducteur de pression (14), le raccord de sortie supplémentaire et le raccord d'entrée supplémentaire (44) sont formés d'une bride (24) pour laquelle l'un des raccords est formé d'un canal central (40) et l'autre raccord respectif est formé d'un canal annulaire (44) disposé tout autour de façon concentrique, et qui peut être bridé de manière amovible sur une bride correspondante d'un filtre ou d'une combinaison de filtre et de réducteur de pression (14), et
(g) afin de raccorder l'unité de traitement de l'eau (12), le raccord de sortie (94) et le raccord d'entrée (98) sont formés de raccords dont l'intérieur débouche directement dans un canal annulaire (42, 44) ;
**caractérisée par**
(h) un débitmètre situé dans l'installation de traitement de l'eau et destiné à fournir des informations sur le débit d'eau brute,
(i) une unité de commande et d'évaluation intégrée dans l'unité de traitement de l'eau ;
(j) un capteur de conductivité muni de moyens destinés à transmettre les signaux générés par le capteur de conductivité à l'unité de commande et d'évaluation, et
(k) un joint d'étanchéité rendant étanche dans le sens axial et radial la zone du piston et permettant d'insérer le piston de coupage dans le raccord de boîtier de sorte que l'installation de coupage peut être entièrement fermée afin de déterminer le degré d'épuisement des granulés échangeurs d'ions.

2. Pièce de robinetterie selon la revendication 1, **caractérisée en ce qu'**afin de raccorder un filtre ou une combinaison de filtre et de réducteur de pression (14), le raccord d'entrée et le raccord de sortie (24) sont disposés avant l'unité de traitement de l'eau (12) par rapport au courant.

3. Pièce de robinetterie selon l'une quelconque des revendications précédentes, **caractérisée en ce que** l'entrée et la sortie (28) sont prévues dans une bride (24) afin d'être raccordée à une pièce de robinetterie de raccordement (18), soit l'entrée soit la sortie étant prévue dans un canal central (40) et l'autre raccord respectif étant prévu dans un canal annulaire (42) disposé tout autour de façon concentrique.

4. Pièce de robinetterie selon l'une quelconque des revendications précédentes, **caractérisée par** une vanne anti-retour (38) située dans l'entrée (16) se situant avant l'installation de coupage (114).
